# FASCICULE DE BREVET EUROPEEN

(11) **EP 0 761 085 B1**
(45) Date de publication et mention de la délivrance du brevet: **06.02.2002**
(21) Numéro de dépôt: 95402021.0
(22) Date de dépôt: 06.09.1995
(51) Int. Cl.: A01D 90/08

(54) **Remorque auto-chargeuse de balles de paille**
Ballenladewagen
Bale wagon

(43) Date de publication de la demande: 12.03.1997
(73) Titulaire: Levesque, Jean-Marc, 77600 Conches sur Condoire (FR)
(72) Inventeur: Levesque, Jean-Marc, 77600 Conches sur Condoire (FR)
(74) Mandataire: Faber, Jean-Paul

(56) Documents cités:
- EP-A- 0 338 468
- FR-A- 2 420 911
- GB-A- 2 056 942
- US-A- 2 772 007

## Description

La présente invention vise une remorque auto-chargeuse de balles de paille.

L'invention se rapporte à une remorque qui est destinée à être attelée à l'arrière d'un tracteur et qui comporte des moyens pour prélever les balles posées sur le sol et les déposer sur une palette située à l'extrémité antérieure de la remorque, des moyens étant prévus pour faire basculer la palette afin de pousser les balles vers un plateau qui est monté basculant à l'arrière afin, lorsque la remorque est pleine de pouvoir la décharger sur un lieu de stockage.

Le brevet français n° 2 420 911 décrit un dispositif de ce genre qui comprend, outre la palette, un chargeur qui est fixé latéralement et qui permet de guider les balles vers un convoyeur disposé transversalement à l'axe longitudinal. Lorsque le convoyeur a reçu un nombre déterminé de balles, celles-ci sont poussées vers la palette qui les reprend et les amène vers un plateau de la remorque.

Un tel système est très complexe et est très lent compte tenu de la faible capacité du chargeur, de leur déplacement par le convoyeur et de leur acheminement par la palette.

La technique antérieure connait également le brevet EP n° 0 338 468 qui comprend un ramasse-balles déposant celles-ci sur un convoyeur et un transporteur mobile longitudinalement à l'extrémité supérieure d'une remorque et susceptible de prélever une série de balles, de soulever celles-ci et de les amener sur la remorque de manière à les empiler par couches successives.

Une telle disposition est plus complexe que la disposition de la machine du brevet français n° 2 420 911 et de plus elle ne permet pas de déposer sur le sol, directement sous forme d'un empilage stable, les différentes balles ramassées.

De telles remorques présentent un certain nombre d'inconvénients, elles sont compliquées, fragiles et, de plus elles sont très chères.

L'un des buts de la présente invention est de réaliser une remorque auto-chargeuse qui soit simple, d'une utilisation très pratique et qui soit beaucoup moins onéreuse que celles qui sont connues.

La remorque auto-chargeuse, selon l'invention, est du type comprenant un châssis monté sur des roues et pourvu de moyens d'attelage à l'arrière d'un tracteur, ledit châssis supportant un plateau, monté basculant à l'arrière dudit châssis sur un axe horizontal perpendiculaire à l'axe longitudinal du châssis, des vérins étant insérés, entre le châssis et le plateau pour commander le basculement dudit plateau, le châssis étant prolongé du côté antérieur, par rapport au plateau, par une partie sur laquelle est montée basculante une palette, des moyens étant disposés latéralement par rapport au châssis pour prélever sur le sol les balles et les amener sur la palette, étant insérés entre cette dernière et ladite partie, des vérins afin d'amener ladite palette en position verticale pour pousser vers le plateau les balles qu'elle reçoit, ladite remorque étant caractérisée en ce que les moyens pour prélever les balles sur le sol comprennent une pince sensiblement en forme de U avec une âme et deux branches dont les extrémités libres sont dirigées vers l'avant de la remorque, l'une au moins desdites branches étant mobile par rapport à l'autre, des moyens étant prévus pour commander l'écartement et le rapprochement des branches, ladite pince étant solidaire latéralement d'un bras monté pivotant, par son extrémité libre, sur un axe horizontal du châssis s'étendant sensiblement parallèlement à l'axe longitudinal de ce dernier, des moyens étant insérés entre le châssis et la pince afin qu'elle puisse occuper une position de ramassage dans laquelle elle s'étend au voisinage du sol pour prélever les balles et une position décalée angulairement afin qu'elle s'étende au-dessus de la partie du châssis pourvue de la palette pour déposer sur cette dernière les balles prélevées.

Grâce à cette disposition, on peut ramasser simultanément, au moins deux balles disposées côte à côte et enserrées par la pince et amener celles-ci sur la palette qui les fait s'engager verticalement sur le plateau, les balles suivantes repoussant les deux premières sur le plateau et ainsi de suite jusqu'au remplissage complet.

Afin que les balles ne tendent pas à glisser vers l'avant lorsqu'elles sont déposées sur le plateau, l'extrémité antérieure du plateau comporte des freins de retenue des balles.

Suivant un détail constructif, les freins de retenue des balles sont constitués de plaques verticales dont le bord supérieur présente des arêtes orientées vers l'extrémité arrière de la remorque.

Afin que les balles restent debout au fur et à mesure du remplissage de la remorque, le plateau comporte des montants de retenue des balles s'étendant transversalement à l'axe longitudinal du plateau et mobiles longitudinalement.

Suivant un détail constructif, les montants de retenue des balles sont portés par un chariot relié à un dispositif de freinage pour son déplacement depuis la partie antérieure à la partie postérieure du plateau, des moyens étant prévus pour ramener le chariot vers l'extrémité antérieure du plateau.

Suivant un détail constructif, l'une des branches de la pince est solidaire du bras et est prolongée par une partie formant une partie de l'âme, tandis que l'autre partie de l'âme est solidaire de l'autre branche et est agencée pour coulisser sur la première partie de l'âme, un vérin étant inséré entre les deux parties de ladite âme.

Enfin, suivant une dernière caractéristique, le bras est relié par une biellette arquée à un levier articulé sur le châssis sur un axe parallèle à l'axe d'articulation du bras, un vérin étant inséré entre un point intermédiaire du levier et le châssis.

L'invention va maintenant être décrite avec plus de détails en se référant à un mode de réalisation particulier donné à titre d'exemple seulement et représenté aux dessins annexés, dans lesquels :

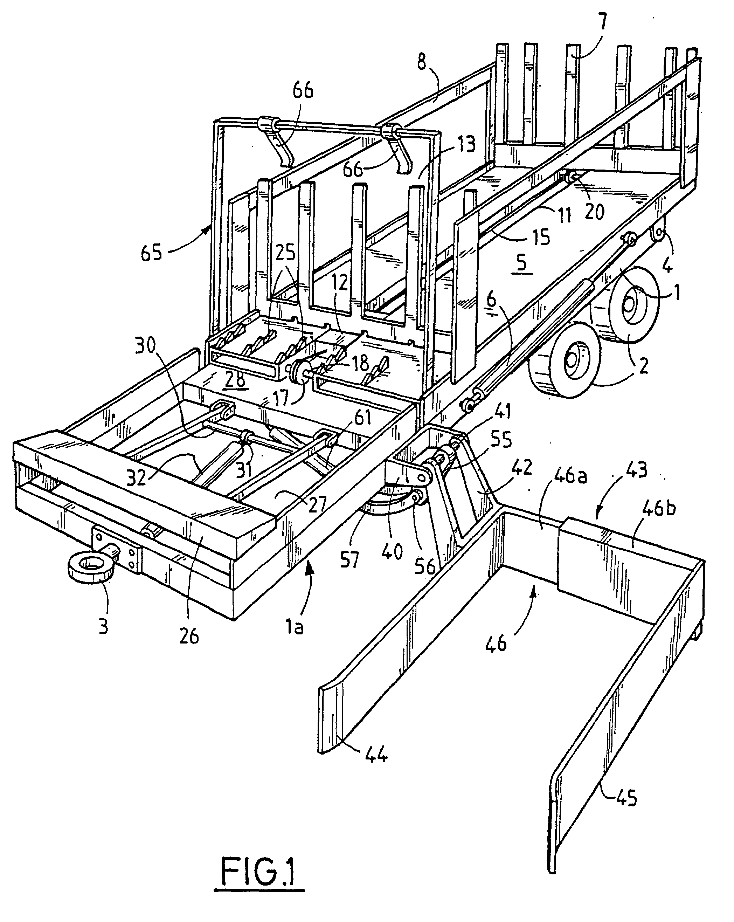

Figure 1 est une vue en perspective d'une remorque auto-chargeuse, selon l'invention.
Figure 2 montre schématiquement un détail.
Figure 3 est une vue en plan de la partie antérieure du châssis.
Figure 4 est une vue en coupe suivant la ligne 4-4 de la figure 3.
Figure 5 est une vue en coupe suivant la ligne 5-5 de la figure 3.
Figure 6 montre des schémas du fonctionnement de la remorque.

La remorque représentée aux figures comprend un châssis 1 supporté par des roues 2.

A son extrémité antérieure le châssis 1 est pourvu d'un anneau 3 pour son attelage à l'arrière d'un tracteur.

Le châssis 1 supporte, monté basculant sur un axe 4, un plateau 5, des vérins 6 étant insérés entre le châssis 1 et ledit plateau 5 afin, comme cela sera exposé plus loin, de pouvoir décharger la remorque lorsqu'elle est pleine en amenant le plateau 5 dans une position verticale.

Le plateau 5 est pourvu d'une ridelle arrière 7 et de deux ridelles latérales 8.

Le plateau 5, dans sa partie centrale, comporte une glissière 11 dans laquelle est guidé un chariot 12 qui est solidaire d'un montant 13 constituant des butées.

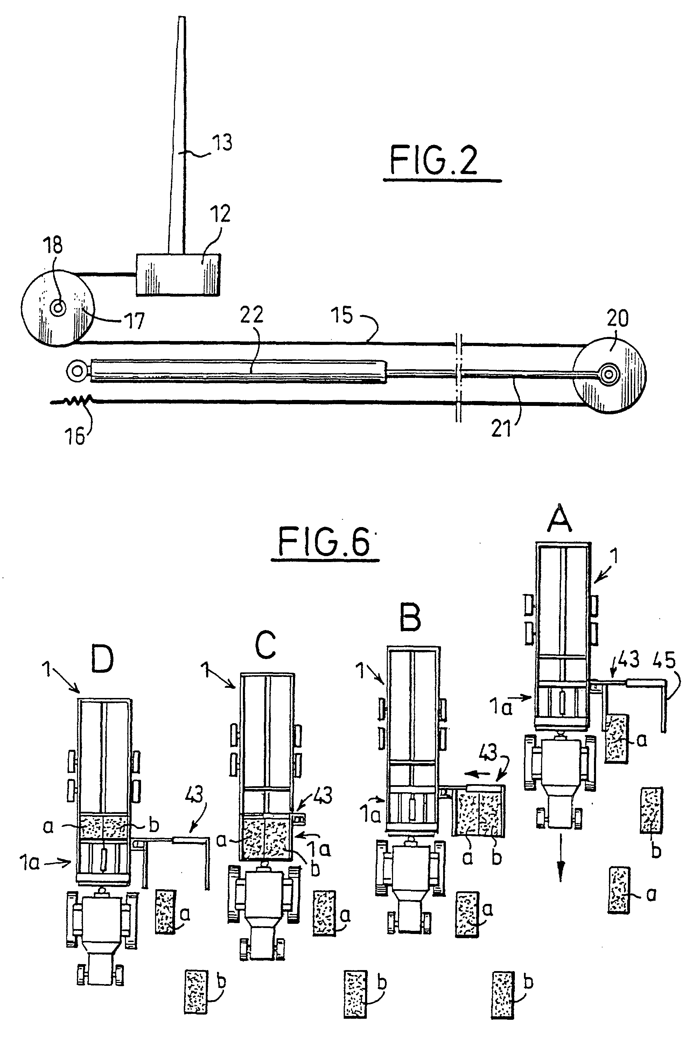

Le chariot 12 est relié par un lien 15 à un point fixe 16 du plateau 5, ledit lien 15 étant guidé, d'une part, sur une poulie 17 tournant folle sur un axe 18 porté par le plateau et, d'autre part, sur une poulie 20 portée par l'extrémité libre de la tige 21 du piston d'un vérin à simple effet 22 dont le corps est fixé au plateau 5 (voir figure 2).

Le vérin 22 peut être alimenté dans le sens correspondant au déplacement du chariot 12 vers l'avant de la remorque. Lorsque ledit chariot 12 occupe cette position à l'avant de la remorque, le vérin est directement mis en communication avec le retour d'huile de sorte que le chariot peut être déplacé vers l'arrière de la remorque, mais freiné.

Le plateau 5 est pourvu, à son extrémité avant, de freins 25 constitués par des plaques verticales dont le bord supérieur est découpé afin de former des arêtes orientées vers l'extrémité arrière dudit plateau.

Le plateau 5 a une longueur inférieure à celle du châssis 1 dont la partie antérieure la est formée par un cadre supportant une palette 26.

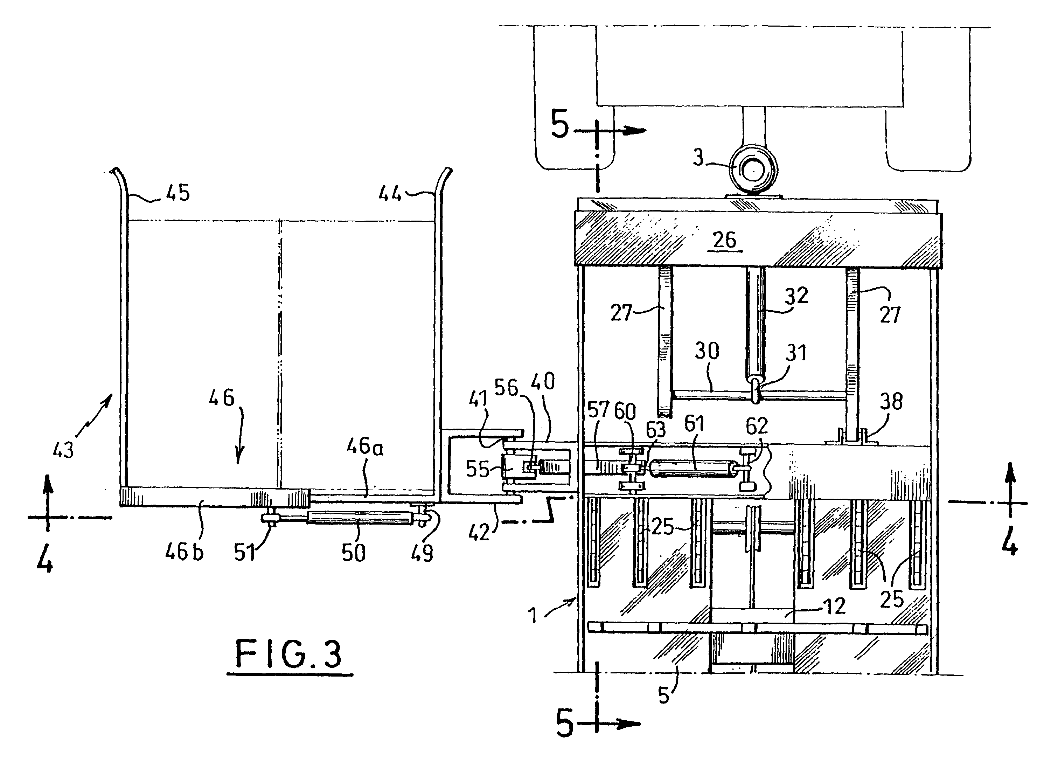

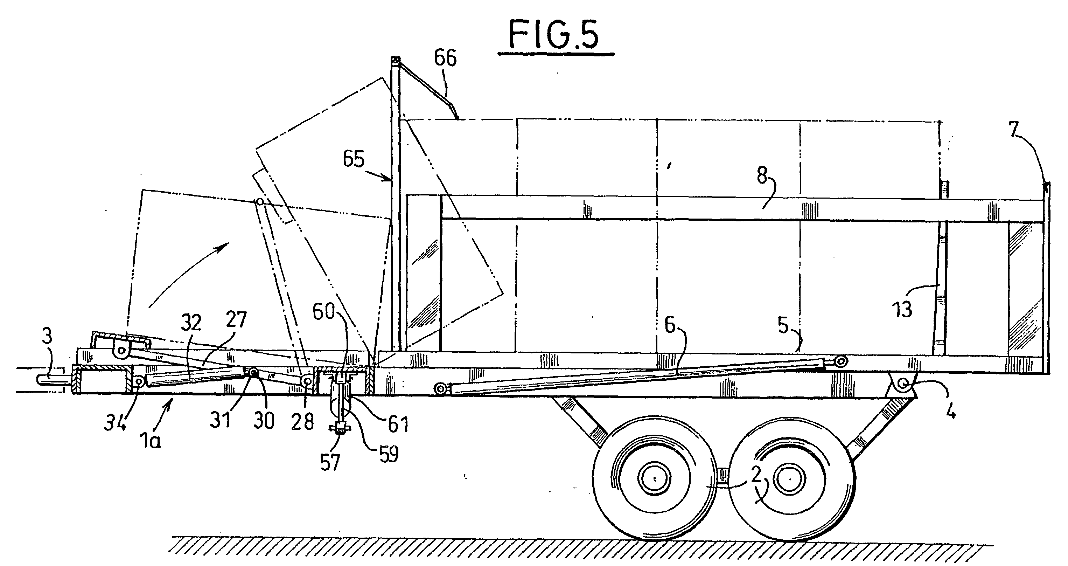

La palette 26 comporte deux jambes 27 montées pivotantes par leur extrémité libre sur des axes 28, les jambes étant reliées par une traverse 30 sur laquelle s'articule l'extrémité libre de la tige 31 du piston d'un vérin 32 dont le corps est articulé sur un axe 34 de la partie 1a de manière que la palette 26 puisse occuper deux positions, une position de repos dans laquelle elle porte contre la partie 1a et une position active dans laquelle elle s'étend verticalement (voir figures 3 et 5).

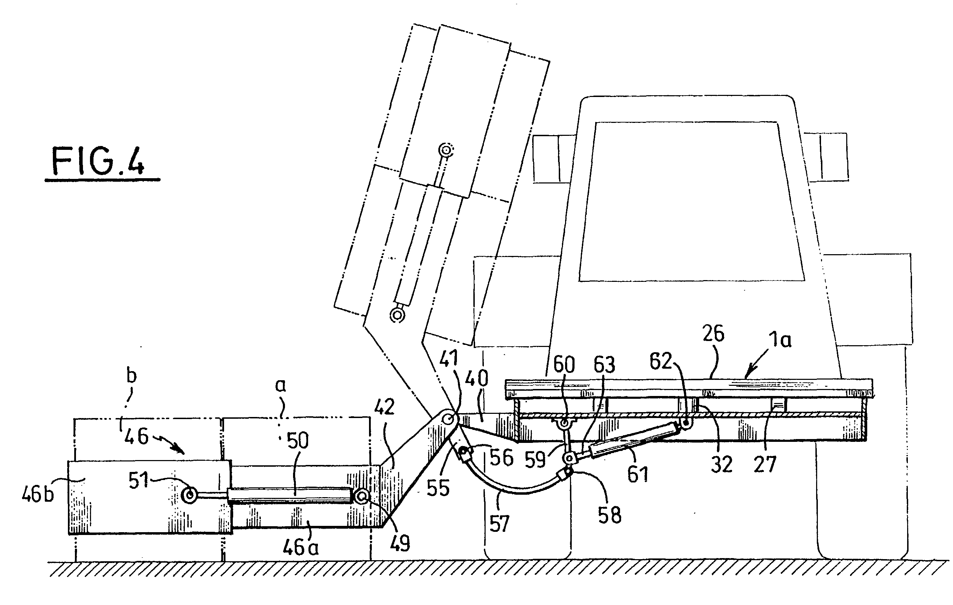

Sur l'un des côtés du châssis 1 est montée une chape 40 dont les ailes supportent un axe horizontal 41 sur lequel est calée l'une des extrémités d'une paire de bras 42 dont l'autre extrémité est solidaire d'une pince 43 (voir figures 3 et 4).

La pince 43 affecte une forme générale en U avec deux branches 44 et 45 et une âme 46.

L'âme 46 comprend une partie fixe 46a solidaire de la branche 44 sur laquelle est montée coulissante une partie 46b solidaire de la branche 45.

L'écartement et le rapprochement des branches 44 et 45 sont commandés par un vérin 50 dont le corps est fixé à une patte 49 de la surface externe de la partie 46a, tandis que la tige du piston est reliée à une patte 51 de la partie 46b de ladite âme 46.

Sur l'axe 41 est calée une barrette 55 au voisinage de l'extrémité libre de laquelle s'articule, sur un axe 56, l'une des extrémités d'une biellette arquée 57 dont l'autre extrémité est reliée articulée par un axe 58 à un levier 59 articulé sur un axe 60 du châssis 1, un vérin 61 étant, par son corps, articulé sur un axe 62 du châssis, tandis que la tige du piston est reliée articulée en un point intermédiaire du levier 59 (voir figure 4).

Le plateau 5 comporte, à l'avant, un porti-que 65 dont la barre horizontale comporte deux griffes de retenue 66 montée légèrement basculante de manière à laisser passer les balles lors du chargement et à retenir celles-ci pour les empêcher de retomber en arrière.

Le fonctionnement est imagé en se rapportant aux schémas de la figure 6.

La remorque est déplacée sur le terrain, la pince 43 étant disposée dans une position de ramassage au voisinage du sol. Lors du déplacement, la pince 43 rencontre une première balle a, celle-ci venant porter contre la branche 44, une seconde balle b venant s'insérer entre la première balle a et la branche 45, le vérin 50 étant commandé afin que lesdites branches 44 et 45 enserrent les balles a et b (vues A et B).

Le vérin 61 est ensuite commandé de manière que la pince 43 soit pivotée autour de l'axe 41 de 180° et vienne aussi se situer au-dessus de la palette 26 (vue C), le vérin 50 étant alors commandé pour que les branches 44 et 45 s'écartent afin que les balles a et b soient disposées sur ladite palette 26, la pince étant, par le vérin 61, ramenée dans sa position initiale de ramassage, tandis que le vérin 32 est commandé pour faire pivoter la palette 26 vers une position verticale afin d'amener les balles a et b verticalement sur les freins 25 du plateau 5 contre les montants 13 du chariot 12 (vue D), lesdites balles a et b étant également retenues par les griffes 66.

On procède de la même façon jusqu'à ce que la remorque soit pleine, à chaque opération, les deux balles déposées sur la palette 26 et amenées en position verticale poussent les deux balles précédemment posées sur le plateau 5.

On amène ensuite la remorque à l'emplacement prévu pour le stockage et on commande les vérins 6 afin de faire basculer le plateau 5 sur l'axe 4 vers une position verticale et on déplace la remorque vers l'avant pour que l'ensemble des balles qu'elle contient reste empilé sur le sol.

Pour le transport sur route, la pince 43 est maintenue contre la palette 26 de sorte que la remorque n'occupe pas un encombrement incompatible avec la réglementation routière.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Remorque auto-chargeuse de balles de paille du type comprenant un châssis (1) monté sur des roues (2) et pourvu de moyens d'attelage (3) à l'arrière d'un tracteur, ledit châssis (1) supportant un plateau (5) monté basculant à l'arrière dudit châssis (1) sur un axe horizontal (4) perpendiculaire à l'axe longitudinal du châssis, des vérins (6) étant insérés entre le châssis et le plateau pour commander le basculement dudit plateau, le châssis (1) étant prolongé du côté antérieur par rapport au plateau par une partie (1a) sur laquelle est montée basculante une palette (26), des moyens étant disposés latéralement par rapport au châssis pour prélever sur le sol les balles et les amener sur la palette (26), des vérins (32) étant insérés entre cette dernière et la partie (1a) afin d'amener ladite palette en position verticale pour pousser vers le plateau (5) les balles qu'elle reçoit, **caractérisée en ce que** les moyens pour prélever les balles sur le sol comprennent une pince (43) sensiblement en forme de U avec une âme (46) et deux branches (44, 45) dont les extrémités libres sont dirigées vers l'avant de la remorque, l'une au moins desdites branches étant mobile par rapport à l'autre, des moyens (50) étant prévus pour commander l'écartement et le rapprochement des branches, ladite pince (43) étant solidaire latéralement d'un bras (42) monté pivotant, par son extrémité libre, sur un axe horizontal (41) du châssis (1) s'étendant sensiblement parallèlement à l'axe longitudinal de ce dernier, des moyens (55a, 63) étant insérés entre le châssis et la pince (43) afin qu'elle puisse occuper une position de ramassage dans laquelle elle s'étend au voisinage du sol pour prélever les balles et une position décalée angulairement afin qu'elle s'étende au-dessus de la partie (1a) du châssis (1) pourvu de la palette (26) pour déposer sur cette dernière les balles prélevées.

2. Remorque auto-chargeuse de balles de paille, selon la revendication 1, **caractérisée en ce que** l'extrémité antérieure du plateau comporte des freins (25) de retenue des balles.

3. Remorque auto-chargeuse de balles de paille, selon la revendication 2, **caractérisée en ce que** les freins de retenue des balles sont constitués de plaques verticales dont le bord supérieur présente des arêtes orientées vers l'extrémité arrière de la remorque.

4. Remorque auto-chargeuse de balles de paille, selon la revendication 1, **caractérisée en ce que** le plateau (5) comporte des montants (13) de retenue des balles s'étendant transversalement à l'axe longitudinal du plateau et mobiles longitudinalement.

5. Remorque auto-chargeuse de balles de paille, selon la revendication 4, **caractérisée en ce que** les montants (13) de retenue des balles sont portés par un chariot (12) relié à un dispositif de freinage pour son déplacement depuis la partie antérieure à la partie postérieure du plateau (S), des moyens étant prévus pour ramener le chariot (12) vers l'extrémité antérieure du plateau.

6. Remorque auto-chargeuse de balles de paille, selon la revendication 1, **caractérisée en ce que** l'une des branches (44) de la pince (43) est solidaire du bras (42) et est prolongée par une partie (46a) formant une partie de l'âme (46), tandis que l'autre partie de l'âme (46b) est solidaire de l'autre branche (45) et est agencée pour coulisser sur la première partie de l'âme (46a), un vérin (50) étant inséré entre les deux parties de ladite âme.

7. Remorque auto-chargeuse de balles de paille, selon la revendication 1, **caractérisée en ce que** le bras (42) est relié par une biellette arquée (57) à un levier (59) articulé sur le châssis (1) sur un axe (60) parallèle à l'axe (41) d'articulation du bras (42), un vérin (61) étant inséré entre un point intermédiaire du levier et le châssis (1).

## Patentansprüche

1. Selbstladewagen für Strohballen, mit einem Fahrgestell (1), das auf Rädern (2) gelagert und mit Mitteln (3) zum Ankuppeln hinter einem Schlepper versehen ist, wobei genanntes Fahrgestell (1) eine Platte (5) trägt, die an der hinteren Seite des genannten Fahrgestelles (1) um eine horizontale Achse (4) schwenkbar gelagert ist, die zur Längsachse des Fahrgestelles senkrecht ist, Arbeitszylinder (6) zwischen das Fahrgestell und die Platte eingefügt sind, um das Schwenken der genannten Platte zu steuern, das Fahrgestell (1) an der Vorderseite der Platte durch einen Teil (1a) verlängert ist, auf dem eine Ladeplatte (26) schwenkbar angeordnet ist, Mittel seitlich am Fahrgestell angeordnet sind, um Ballen vom Boden aufzunehmen und sie auf die Ladeplatte (26) zu verbringen, und wobei Arbeitszylinder (32) zwischen letztere und den Teil (1a) eingefügt sind, um die genannte Ladeplatte in eine vertikale Position zu bringen, um die Ballen, die sie aufgenommen hat, gegen die Platte (5) hin zu schieben, **dadurch gekennzeichnet, dass** die Mittel zum Aufnehmen der Ballen vom Boden eine Klemme (43) im wesentlichen in Form eines U mit einem Steg (46) und zwei Schenkeln (44,45) aufweisen, deren freie Enden zur Vorderseite des Wagens hin gerichtet sind, wobei zumindest einer der genannten Schenkel relativ zum anderen beweglich ist, Mittel (50) vorgesehen sind, um das Auseinanderbewegen und das einander Annähern der Schenkel zu Steuern, wobei genannte Klemme (43) seitlich an einem Arm (42) befestigt ist, der an seinem freien Ende um eine horizontale Achse (41) am Fahrgestell (1) schwenkbar ist, die sich im wesentlichen parallel zur Längsachse des letzteren erstreckt, wobei Mittel (55a, 63) zwischen das Fahrgestell und die Klemme (43) eingefügt sind, damit diese eine Einsammelstellung, in der sie sich in der Nähe des Bodens erstreckt, um Ballen aufzunehmen, sowie eine winkelmäßig versetzte Stellung einnehmen kann, damit sie sich oberhalb des Teiles (1a) des Fahrgestelles (1) erstreckt, der mit der Ladeplatte (26) versehen ist, um auf letzterer die aufgenommenen Ballen abzulegen.

2. Selbstladewagen für Strohballen nach Anspruch 1, **dadurch gekennzeichnet, dass** das vordere Ende der Platte Bremsen (25) für das Rückstauen von Ballen aufweist.

3. Selbstladewagen für Strohballen nach Anspruch 2, **dadurch gekennzeichnet, dass** die Bremsen zum Rückstauen von Ballen durch vertikale Platten gebildet sind, dessen oberer Rand Ecken aufweist, die dem hinteren Ende des Wagens zugewandt sind.

4. Selbstladewagen für Strohballen nach Anspruch 1, **dadurch gekennzeichnet, dass** die Platte (5) zum Rückhalten der Ballen Ständer (13) aufweist, die sich quer zur Längsachse der Platte erstrecken und in Längsrichtung beweglich sind.

5. Selbstladewagen für Strohballen nach Anspruch 4, **dadurch gekennzeichnet, dass** die Ständer (13) zum Rückhalten der Ballen durch einen Schlitten (12) getragen sind, der mit einer Vorrichtung zum Bremsen seiner Verschiebung vom vorderen Teil zum hinteren Teil der Platte (5) hin versehen ist, wobei Mittel vorgesehen sind, um den Schlitten (12) zum vorderen Ende der Platte zurück zu bringen.

6. Selbstladewagen für Strohballen nach Anspruch 1, **dadurch gekennzeichnet, dass** einer (44) der Schenkel der Klemme (43) am Arm (42) befestigt ist und durch einen Teil (46a) verlängert ist, welcher einen Teil des Steges (46) bildet, und dass der andere Teil (46b) des Steges an dem anderen Schenkel (45) befestigt und dazu eingerichtet ist, um auf den ersten Teil (46a) des Steges zu gleiten, wobei ein Arbeitszylinder (50) zwischen die zwei Teile des genannten Steges eingefügt ist.

7. Selbstladewagen für Strohballen nach Anspruch 1, **dadurch gekennzeichnet, dass** der Arm (42) über einen gebogenen Schwingarm (57) mit einem Hebel (59) verbunden ist, der am Fahrgestell (1) um eine Achse (60) schwenkbar ist, die zur Schwenkachse (41) des Armes (42) parallel ist, wobei ein Arbeitszylinder (61) zwischen eine innerhalb der Länge des Hebels gelegene Stelle und das Fahrgestell (1) eingefügt ist.

## Claims

1. A self-loading bale wagon of the type comprising a chassis (1) mounted on wheels (2) and provided with means for coupling (3) at the rear of a tractor, said chassis (1) supporting a platform (5) mounted tipping-over to the rear of said chassis (1) on a horizontal axis (4), perpendicular to the longitudinal axis of the chassis, screws (6) being inserted between the chassis and the platform to control the tipping-over of said platform, chassis (1) being extended by the forward side in relation to the platform by a part (1a) on which a tipping-over pallett (26) is mounted, means being arranged laterally in relation to the chassis to take up the bales on the ground and to bring them onto pallett (26), screws (32) being inserted between this latter and part (1a) so as to bring said pallett into a vertical position to push the bales it receives towards the platform (5), **characterised in that** the means for taking up the bales on the ground comprise of pincers (43) approximately in the shape of a U, having a core (46) and two arms (44,45), the two free extremities of which are directed towards the front of the wagon, at least one of said arms being mobile in relation to the other, means (50) being provided to control the spreading apart and the bringing together of the arms, said pincers (43) being laterally dependant on an arm (42) pivotally mounted by its free extremity on a horizontal axis (41) of chassis (1), extending approximately parallel to longitudinal axis of this latter, means (55a,63) being inserted between the chassis and the pincers (43), so that it can take up a collecting position in which it extends to the proximity of the ground to take up the bales, and an angularly offset position so that it extends to above part (1a) of chassis (1) provided by pallett (26) for depositing the taken up bales onto this latter.

2. A self-loading bale wagon according to claim 1, **characterised in that** the forward extremity of the platform has brakes (25) for retaining the bales.

3. A self-loading bale wagon according to claim 2, **characterised in that** the brakes for retaining the bales are comprised of vertical plates, the upper edge of which has edges (ridges) directed towards the rear extremity of the wagon.

4. A self-loading bale wagon according to claim 1, **characterised in that** platform (5) comprises stays (13) for retaining the bales which extend to the longitudinal axis of the platform and are longitudinally mobile.

5. A self-loading bale wagon according to claim 4, **characterised in that** the stays (13) for retaining the bales are carried by a carriage (12) connected to a brake arrangement for its movement from the forward part to the rear part of platform (5), means being provided for bringing the carriage (12) back towards the forward extremity of the platform.

6. A self-loading bale wagon according to claim 1, **characterised in that** one of the arms (44) of pincers (43) is dependant on arm (42) and is extended by a part (46a) forming a part of core (46), whilst the other part of the core (46b) is dependant on the other arm (45) and is arranged to slide on the first part of core (46a), a screw (50) being inserted between the two parts of said core.

7. A self-loading bale wagon according to claim 1, **characterised in that** arm (42) is connected by an arc-shaped rocker bar (57) to an articulated lever (59) on the chassis (1) on an axis (60) parallel to articulation axis (41) of arm (42), a screw (61) being inserted between an intermediate point of the lever and the chassis (1).
